# EUROPEAN PATENT SPECIFICATION

(11) **EP 4 144 552 B1**
(45) Date of publication and mention of the grant of the patent: **18.03.2026**
(21) Application number: 22193219.7
(22) Date of filing: 31.08.2022
(51) Int. Cl.: B60K 1/00, B60K 6/20, B60K 6/387, B60K 6/52, B60K 17/348, B60K 17/346, B60K 6/36, B60K 6/48, B60K 6/405

(54) **TRACTION ASSEMBLY FOR A VEHICLE**
ANTRIEBSANORDNUNG FÜR EIN FAHRZEUG
ENSEMBLE DE TRACTION POUR UN VÉHICULE

(30) Priority: 06.09.2021 IT 202100023009
(43) Date of publication of application: 08.03.2023
(73) Proprietor: IVECO S.P.A., 10156 Torino (IT)
(72) Inventor: PEREIRA DE LEMOS, José Francivaldo, SETE LAGOAS MG (BR); BERNARDINI, Alessandro, 16126 GENOVA (IT)
(74) Representative: Studio Torta S.p.A.

(56) References cited:
- EP-A1- 3 246 187
- DE-A1- 102019 215 124
- FR-A1- 2 975 047
- IT-A1- 201900 015 422

## Description

### TECHNICAL FIELD

This invention relates to a vehicular traction assembly, more specifically to a hybrid traction assembly for a heavy vehicle.

### STATE OF THE PRIOR ART

The ecological transition increasingly requires the use of electric motors to assist or replace internal combustion engines for the purposes of vehicular transport.

To this end, it is known to provide traction assemblies configured to provide torque to the wheels of a vehicle comprising, at the same time, a power take-off configured to connect to an output shaft of an internal combustion engine and one or more electric motors configured to cooperate with or replace this internal combustion engine.

It is required that these traction assemblies are compact and versatile, i.e., that they do not excessively increase the dimensions and weight of the vehicle but that they manage to provide various operating configurations. This requirement is felt more urgently in heavy vehicles, where it is necessary to provide torque to the wheels depending on the different vehicle operating needs.

Thus, the need is felt to provide traction assemblies that manage to be versatile and compact.

Examples of known traction assemblies in the art are disclosed in publications DE102019215124 A1, IT201900015422 A1, EP3246187 A1 or FR2975047 A1.

The object of this invention is to meet the above requirements in a cost-effective and optimised manner.

### SUMMARY OF THE INVENTION

The above-mentioned purpose is achieved with a vehicle traction assembly as claimed in the attached claims.

### BRIEF DESCRIPTION OF THE DRAWINGS

For a better understanding of this invention, a preferred embodiment is described below by way of non-limiting example and with reference to the accompanying drawings, wherein:

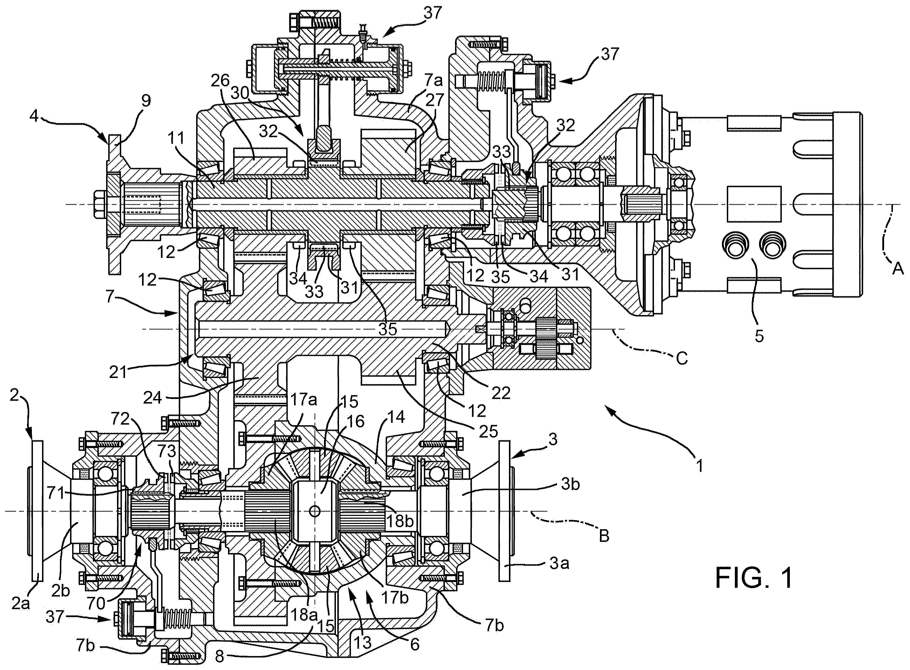

- Figure 1 illustrates a front cross-section view of the assembly of the invention;
- Figures 2A-2B illustrate different operating conditions of a portion of the assembly illustrated in Figure 1;
- Figures 3A-3B illustrate different operating conditions of a portion of the assembly illustrated in Figure 1; and
- Figures 4A-4B illustrate different operating conditions of a portion of the assembly illustrated in Figure 1;

### DETAILED DESCRIPTION OF THE INVENTION

The reference number 1 indicates, in the attached figures, a traction assembly according to the invention configured to transmit torque to corresponding couplings 2, 3 configured to be connected to a front axle (not illustrated) and a rear axle (not illustrated) of a vehicle, not illustrated, to transmit the torque received to the latter.

In particular, the traction assembly 1 is configured to provide torque to the couplings 2, 3 starting from at least one of either: an input clutch 4 configured to be connected to a combustion engine (not illustrated) of the vehicle and at least one electric machine 5, described, below, for brevity as an electric motor, configured to provide torque using electricity, for example provided by a vehicle battery set (not illustrated) or to absorb torque to generate electricity to provide to this battery set.

The traction assembly 1 comprises a transmission 6 operationally placed between the couplings 2, 3, the input clutch 4 and the at least one electric motor 5 configured to enable the transmission of torque according to at least one speed ratio.

Advantageously, the traction assembly 1 comprises a casing 7 configured to delimit a space 8 that is isolated from the outside; the space 8 is configured to house the transmission 6 as described below. Preferably, the casing 7 comprises a central portion 7a and a pair of side portions 7b placed near the couplings 2, 3**.**

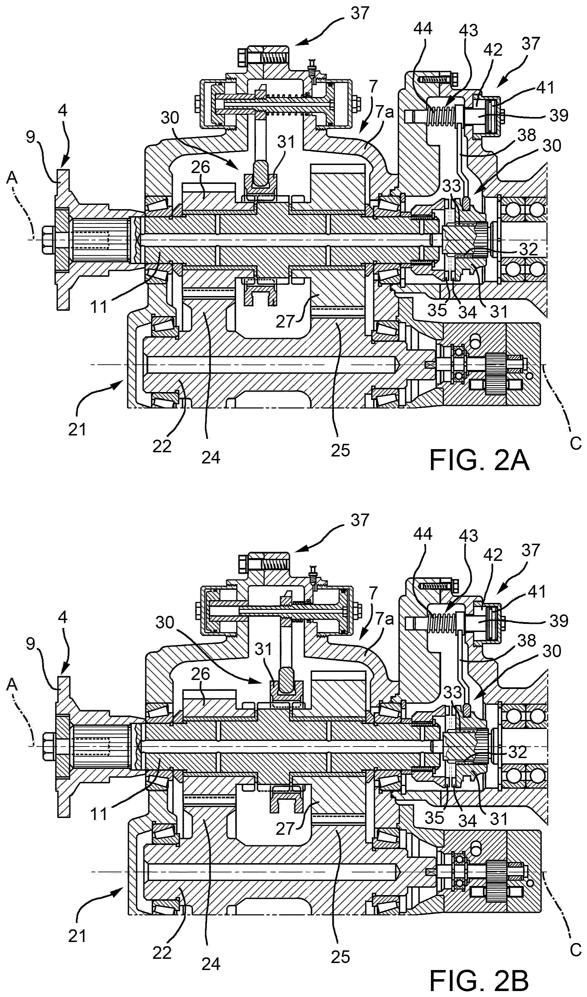

As illustrated in Figure 2, the transmission 6 comprises an input shaft 11 rotationally supported by the central portion 7a of the casing 7 via a pair of rolling supports 12 around an axis A and extending partially outside the casing 7. Here, the shaft 11 rigidly carries a plate 9 defining the input clutch 4 and, thus, which can be connected to the internal combustion engine.

The transmission 6 comprises a differential assembly 13 that is operationally placed between the couplings 2, 3 and the shaft 11.

More precisely, the couplings 2, 3 each comprise a plate 2a, 3a connecting with the respective axles and placed outside the casing 7, in particular by the side portions 7b of the latter, and a hub 2b, 3b extending inside the casing 7 and rotationally supported on the side portion 7b of the latter via the rolling supports 12.

In particular, the hubs 2b, 3b are coaxial between them around a rotation axis B that, preferably, is parallel to the rotation axis A of the shaft 11.

The hubs 2b, 3b are configured to cooperate with the differential assembly 13 as described, in detail, below.

The differential assembly 13 may be, as illustrated, of a known type, i.e., comprising a chain carrier 14 carrying multiple planet gears 15, for example four planet gears equally angularly spaced apart by 90° and supported by a cross-shaped support 16 that is rigidly carried by the chain carrier 14 and around which arms can rotate the planet gears 15. In particular, the planet gears rotate on the support 14 around axes contained on a plane perpendicular to the axis B.

The planet gears 15 cooperate with a corresponding crown wheel comprising, respectively, a conic, left toothed wheel 17a and a right toothed wheel 17b rigidly carried by corresponding support shafts 18a, 18b carried rotationally by the casing 7, around the axis B and, thus, coaxially between them; advantageously, these support shafts 18a, 18b are supported rotationally freely by the central portion 7a using rolling supports 12.

In particular, the differential assembly 13 is operationally connected to the shaft 11 via a reducer assembly 21 comprising a support shaft 22 carried rotationally freely by the casing 7 around an axis C using rolling supports 12, in particular by the central portion 7a in a vertical position between the shaft 11 and the differential assembly 13.

In detail, the support shaft 22 comprises a pair of toothed wheels 24, 25 carried by the support shaft 22 integral to the rotation with the latter.

The shaft 11 carries a pair of toothed wheels 26, 27 configured to mesh with the toothed wheels 24, 25 and, as a result of the above, carried rotationally freely around the axis A by the shaft 11.

The transmission 6 comprises selector means 30 that are configured to make one of the toothed wheels 26, 27 selectively integral with the shaft 11 and additional selector means 30 configured to selectively connect the output shaft of the electric motor 5 to the shaft 11.

It should be noted how the clutch 4 is always connected to the shaft 11 since the flange 9 is rigidly carried by the latter.

Preferably, these selector means 30 comprise a sleeve 31 carried integral to the rotation but free in its translation on the axis A by the shaft 11. In particular, the sleeve 31 defines a toothing 32 configured to cooperate with a toothing 33 made on the shaft 11.

The toothed wheels 26, 27 are each provided with a hub that defines respective portions equipped with toothings 34, 35. The sleeve 31 is sized so that, running along the axis A, it can mesh its toothing 32 with the toothing 33 of the shaft 11 and one of the toothings 34, 35 of the toothed wheels 26, 27.

In particular, the selector means 30 comprise actuator means 37 configured to move the sleeve 31 along the shaft 11. Advantageously, these actuator means 37 are pneumatic actuator means.

Preferably, according to the embodiment described, these actuator means 37 comprise a rod 38 carried rigidly by a shaft 39 equipped, at the respective ends, with one free piston 41 to move in a respective chamber 42 configured to selectively house a fluid under pressure, for example compressed air.

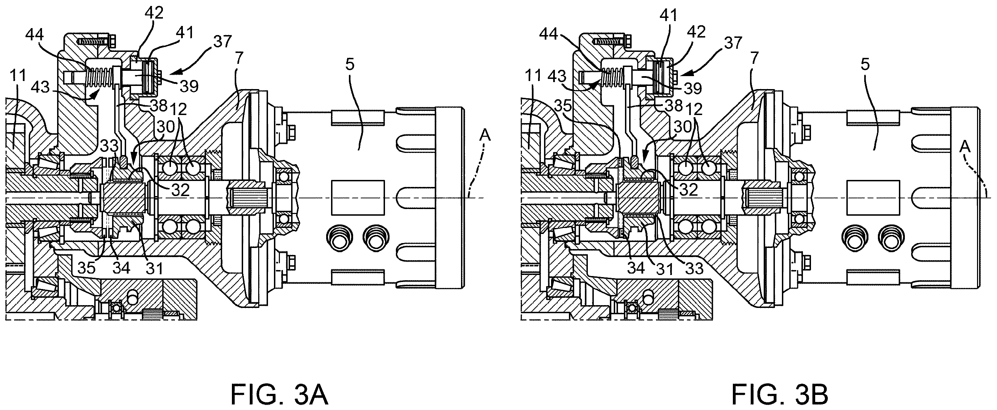

As better illustrated in Figures 2A-2b and 3A-3B, the actuator means 37 also comprise elastic means 43 such as a helical spring 44, operationally placed between the shaft 39 and the casing 7. In particular:
- the sleeve 31 placed between the toothed wheels 26 and 27 is pushed by the elastic means 43 so as to keep the sleeve 31 meshed with the toothed wheel 26 when there is no compressed fluid in the chamber 42 (as illustrated in Figures 2A-2B); and
- the sleeve 31 placed between the electric motor 5 and the shaft 11 is pushed by the elastic means 43 so as to keep the sleeve 31 idle on the output shaft of the electric motor 5 when there is no compressed fluid in one of the chambers 42 (as illustrated in Figures 3A-3B).

One of the toothed wheels 24, 25 of the reduction stage 21, in particular, as illustrated, the toothed wheel 24, meshes with a toothing 45 carried integrally by the chain carrier 14. In the embodiment described, the chain carrier 14 is divided into two axial portions, which have different shapes from each other and are connected via threaded connections; the toothing 45 is made on one of the two portions of the chain carrier 14.

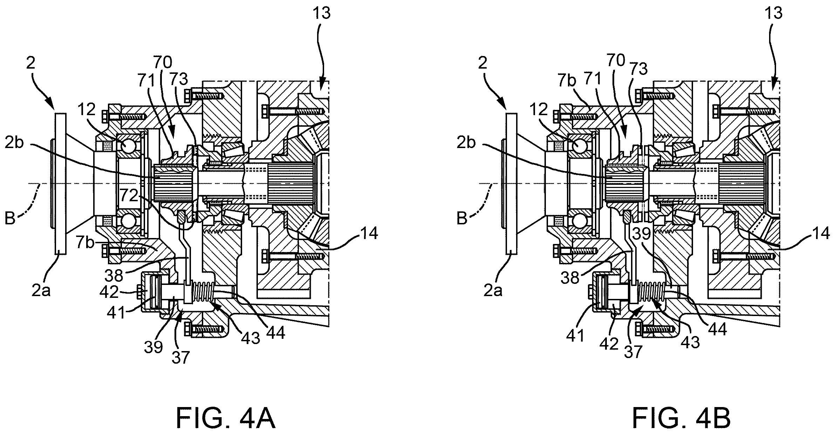

Referring, now, to the Figures 4A-4B, it should be noted that, preferably, the hub 2b of the coupling 2 and the hub 3b of the coupling 3 both consist of a single piece with, respectively, the support shafts 18a, 18b carrying the wheels 17a, 17b of the differential 13.

The transmission 6 comprises locking means 70 of the differential assembly 13 to inhibit operation thereof.

According to the above, the locking means 70 are configured to connect the chain carrier 14 to the casing 7.

In particular, the locking means 70 comprise a sleeve 71 supported, integral in rotation but free to run along the axis B, for example using a grooved coupling, on the support shaft 18b. The sleeve 71 is equipped with a toothing 72 that is axial and is configured to assume a first position in which the toothing 72 cooperates with a toothing 73 carried rigidly by the casing 7 and a second position in integral rotation with the support shaft 18a, in neutral.

The sleeve 71 is controlled using actuator means 37 controlling the selection of the sleeve 61 similarly to the selection of the toothed wheels 26, 27 and, thus, not further described for brevity's sake. In particular, the elastic means 43 keep the sleeve in a rest condition so that the sleeve 71 rotates idly with the support shaft 18a.

The operation of the traction assembly 1 according to the invention as described above is as follows.

In a first, purely thermal, operating condition, the torque released to the couplings 2, 3 is exclusively provided by the input clutch 2. In this configuration, represented by the combination of the states in Figure 2A and Figures 3A, 3B, the actuator means 30 select one of the toothed wheels 26, 27 so that it is integral with the shaft 11 while the output shaft of the electric motor is disconnected from the shaft 11. The torque provided thus to the shaft 11 flows via the coupling with the corresponding toothed wheel 24, 25 to the support shaft 22 and, via the gear between the toothed wheels 24 and 45, to the differential 13. Here, as is known in itself, it is distributed to the toothed wheels 17a, 17b and, thus, to the hubs 18a, 18b.

In a second, hybrid, operating condition, the torque released to the couplings 2, 3 is provided both by the electric motor 5 and by the input clutch 4 or only by the latter and part is used by the electric motor 5 as generator. In this configuration, represented by the combination of the states in Figure 2A and Figures 3A, 3B, the actuator means 30 connect the electric motor 5 to the shaft 11. The torque provided by the clutch 4 and by the electric motor 5 (potentially resistant) to the shaft 11 flows via the corresponding toothed couplings to the support shaft 22, adding up, and, via the gear between the toothed wheels 24 and 45, to the differential 13. Here, as is known in itself, it is distributed to the toothed wheels 17a, 17b and, thus, to the hubs 18a, 18b.

In each of the two operating conditions described above, each equipped with two speeds, two operating variants as described below can also be selected.

In a first operating variant (Figure 6A), the selector means 30 enable the operation of the differential 13 distributing the traction torque among the couplings 2 and 3.

In a second operating variant (Figure 6B), possibly combined with the two preceding ones, the selector means 30 make the chain carrier 14 integral with the casing 7, locking the differential and making the front and rear couplings 2, 3 rotate at the same speed as the chain carrier 14.

The advantages of a traction assembly according to the invention are clear from the foregoing.

The traction system makes it possible, as shown by the high number of operating combinations illustrated, to provide a great variety of traction transmission ratios that are completely thermal, completely electric, hybrid, those with integral or rear traction, or with locked differential.

The traction system is also particularly compact and uses few mechanical elements; thus, the manufacturing costs are reduced.

Again, although all the rotating mechanical elements are inside the casing of the transmission, which is lubricated, the service life of the traction system is increased and the maintenance costs decrease.

## Claims

1. A traction assembly (1) for a vehicle, said traction assembly (1) comprising a first and a second coupling (2, 3) configured to be connected respectively to a front axle and a rear axle of said vehicle, an input coupling (4) configured to be connected to an output shaft of an internal combustion engine of said vehicle and at least one electric machine (5), said traction assembly (1) comprising a casing (7) defining a housing (8) and a transmission (6) housed in said housing (8) and configured to allow torque transmission between said input coupling (4), the at least one electric machine (5) and the couplings (2, 3), said transmission (6) being controlled so as to allow torque transmission according to one of:
- a mode where only said input coupling (4) provides torque to said couplings (2, 3); and
- a mode where both between said inlet (4) and said at least one electric machine (5) supplies torque to said couplings (2,3),
**characterized in that** said transmission (6) comprises a differential (13) comprising a first output hub (18a) rigidly carried by said first coupling (2) and a second hub (18b) rigidly carried by said second coupling (3), said hubs (18a, 18b) and said couplings (2, 3) being coaxial to each other along an axis (B),
said transmission (6) comprising a shaft (11) supported in a rotationally free way around an axis (A) on said casing (7), said input coupling (4) being rigidly carried by said shaft (11) and said at least one electric machine (5) being connectable to said shaft (11),
said shaft (11) being operatively connected to said differential (13) through at least one torque transmission ratio,
, wherein said transmission (6) comprises a reduction stage (21) operatively interposed between the shaft (11) and said differential (13).
wherein said reduction stage (21) comprises a support shaft (22) carried in a rotationally free way by said casing (7) around an axis (C), said support shaft comprising a pair of toothed wheels (24, 25) configured to cooperate with said toothed wheels (26, 27) of said shaft (11), one of said toothed wheels (24, 25) being configured to cooperate with said differential (13).

2. The assembly according to Claim 1, wherein said shaft (11) carries toothed wheels (26, 27), said assembly comprising selector means (30) configured to operatively connect one of said toothed wheels (26, 27) to said differential (13).

3. The assembly according to claim 1 or 2, wherein said at least one electric machine (5) can be selectively connected to the shaft (11) by means of selector means (30).

4. The assembly according to any of the preceding claims, wherein said differential (13) is connected to said toothing (23) by means of a toothing (45) carried rigidly by the chain carrier (14) of said differential (13).

5. The assembly according to one of claims 2 to 4, wherein said selector means (30) comprise a sleeve (31) movable under the action of said actuator means (37) along the shaft (11) in a rotationally coupled manner , said sleeve (31) defining a toothing (32) configured to cooperate with a toothing (33) made on said shaft (11) and with a further toothing (34, 35, 36) made on the element to be connected to said shaft ( 11), said sleeve (31) being sized and controlled by said actuator means (37) so as to assume a position in which it does not mesh with any of said further toothings (34, 35) and a position in which it meshes with one of them.

6. The assembly according to one of the previous claims, wherein said transmission (6) comprises locking means (70) of said differential (13) configured to lock the operation of said differential (13).

7. The assembly according to claim 6, wherein said locking means (70) comprise a sleeve (71) movable under the action of said actuator means (37) along one of said hubs (18a, 18b) in a rotationally coupled manner thereto, said sleeve (71) defining a toothing (72) configured to selectively cooperate with a toothing (73) made on said casing (7).

8. The assembly according to one of claims 2 to 7, wherein said actuator means (37) comprise at least one of a pneumatic, hydraulic, mechanical actuator.

9. The assembly according to one of the preceding claims, in which said at least one electric machine (5) is carried on the opposite side of said casing (7) with respect to said input coupling (4).

10. A vehicle comprising an internal combustion engine, a front axle and a rear axle and a traction assembly (1) according to one of the preceding claims.

11. The vehicle according to claim 10, wherein at least one of said front and rear axle comprises freewheel means, said freewheel means being configured to allow the transmission of torque to the wheel hubs of said axle or to allow them to be supported in a neutral manner.

## Patentansprüche

1. Traktionsanordnung (1) für ein Fahrzeug, wobei die Traktionsanordnung (1) eine erste und eine zweite Kupplung (2, 3), die konfiguriert sind, um jeweils mit einer Vorderachse und einer Hinterachse des Fahrzeugs verbunden zu werden, eine Eingangskupplung (4), die konfiguriert ist, um mit einer Ausgangswelle eines Verbrennungsmotors des Fahrzeugs verbunden zu werden, und mindestens eine elektrische Maschine (5) umfasst, wobei die Traktionsanordnung (1) ein Gehäuse (7), das ein Gehäuse (8) definiert, und ein Getriebe (6), das in dem Gehäuse (8) untergebracht ist und konfiguriert ist, um eine Drehmomentübertragung zwischen der Eingangskupplung (4), der mindestens einen elektrischen Maschine (5) und den Kupplungen (2, 3) zu ermöglichen, umfasst, wobei das Getriebe (6) gesteuert wird, um eine Drehmomentübertragung gemäß einem von Folgendem zu ermöglichen:
- einem Modus, in dem nur die Eingangskupplung (4) den Kupplungen (2, 3) Drehmoment bereitstellt; und
- einem Modus, in dem sowohl die Eingangskupplung (4) als auch die mindestens eine elektrische Maschine (5) den Kupplungen (2, 3) Drehmoment zuführen,
**dadurch gekennzeichnet, dass** das Getriebe (6) ein Differential (13) umfasst, das eine erste Ausgangsnabe (18a), die starr von der ersten Kupplung (2) getragen wird, und eine zweite Nabe (18b), die starr von der zweiten Kupplung (3) getragen wird, umfasst, wobei die Naben (18a, 18b) und die Kupplungen (2, 3) entlang einer Achse (B) koaxial zueinander sind,
wobei das Getriebe (6) eine Welle (11) umfasst, die frei drehbar um eine Achse (A) an dem Gehäuse (7) getragen wird, wobei die Eingangskupplung (4) starr von der Welle (11) getragen wird und die mindestens eine elektrische Maschine (5) mit der Welle (11) verbunden werden kann,
wobei die Welle (11) durch mindestens ein Drehmomentübertragungsverhältnis operativ mit dem Differential (13) verbunden ist,
wobei das Getriebe (6) eine Untersetzungsstufe (21) umfasst, die operativ zwischen der Welle (11) und dem Differential (13) angeordnet ist, wobei die Untersetzungsstufe (21) eine Trägerwelle (22) umfasst, die von dem Gehäuse (7) um eine Achse (C) frei drehbar getragen wird, wobei die Trägerwelle ein Paar Zahnräder (24, 25) umfasst, die konfiguriert sind, um mit den Zahnrädern (26, 27) der Welle (11) zusammenzuwirken, wobei eines der Zahnräder (24, 25) konfiguriert ist, um mit dem Differential (13) zusammenzuwirken.

2. Anordnung nach Anspruch 1, wobei die Welle (11) Zahnräder (26, 27) trägt, wobei die Anordnung Auswahlmittel (30) umfasst, die konfiguriert sind, um eines der Zahnräder (26, 27) operativ mit dem Differential (13) zu verbinden.

3. Anordnung nach Anspruch 1 oder 2, wobei die mindestens eine elektrische Maschine (5) mittels Auswahlmitteln (30) selektiv mit der Welle (11) verbunden werden kann.

4. Anordnung nach einem der vorhergehenden Ansprüche, wobei das Differential (13) mittels einer Verzahnung (45), die starr von dem Kettenträger (14) des Differentials (13) getragen wird, mit der Verzahnung (23) verbunden ist.

5. Anordnung nach einem der Ansprüche 2 bis 4, wobei die Auswahlmittel (30) eine Hülse (31) umfassen, die unter der Wirkung der Betätigungsmittel (37) entlang der Welle (11) in einer drehgekoppelten Weise beweglich ist, wobei die Hülse (31) eine Verzahnung (32) definiert, die konfiguriert ist, um mit einer Verzahnung (33), die an der Welle (11) ausgebildet ist, und mit einer weiteren Verzahnung (34, 35, 36), die an dem mit der Welle (11) zu verbindenden Element ausgebildet ist, zusammenzuwirken, wobei die Hülse (31) so bemessen und von den Betätigungsmitteln (37) derart gesteuert wird, dass sie eine Position, in der sie nicht mit einer der weiteren Verzahnungen (34, 35) in Eingriff steht, und eine Position, in der sie mit einer von ihnen in Eingriff steht, einnimmt.

6. Anordnung nach einem der vorhergehenden Ansprüche, wobei das Getriebe (6) Verriegelungsmittel (70) des Differentials (13) umfasst, die konfiguriert sind, um den Betrieb des Differentials (13) zu sperren.

7. Anordnung nach Anspruch 6, wobei die Verriegelungsmittel (70) eine Hülse (71) umfassen, die unter der Wirkung der Betätigungsmittel (37) entlang einer der Naben (18a, 18b) in einer damit drehgekoppelten Weise beweglich ist, wobei die Hülse (71) eine Verzahnung (72) definiert, die konfiguriert ist, um selektiv mit einer Verzahnung (73), die an dem Gehäuse (7) ausgebildet ist, zusammenzuwirken.

8. Anordnung nach einem der Ansprüche 2 bis 7, wobei die Betätigungsmittel (37) mindestens eines von einem pneumatischen, hydraulischen, mechanischen Betätigungselement umfassen.

9. Anordnung nach einem der vorhergehenden Ansprüche, wobei die mindestens eine elektrische Maschine (5) auf der gegenüberliegenden Seite des Gehäuses (7) in Bezug auf die Eingangskupplung (4) getragen wird.

10. Fahrzeug, das einen Verbrennungsmotor, eine Vorderachse und eine Hinterachse und eine Traktionsanordnung (1) nach einem der vorhergehenden Ansprüche umfasst.

11. Fahrzeug nach Anspruch 10, wobei mindestens eine von der Vorder- und der Hinterachse Freilaufmittel umfasst, wobei die Freilaufmittel konfiguriert sind, um die Übertragung von Drehmoment auf die Radnaben der Achse zu ermöglichen oder um zu ermöglichen, dass sie auf neutrale Weise getragen werden.

## Revendications

1. Ensemble de traction (1) pour un véhicule, ledit ensemble de traction (1) comprenant un premier et un second accouplement (2, 3) configurés pour être reliés respectivement à un essieu avant et à un essieu arrière dudit véhicule, un accouplement d'entrée (4) configuré pour être relié à un arbre de sortie d'un moteur à combustion interne dudit véhicule et au moins une machine électrique (5), ledit ensemble de traction (1) comprenant un carter (7) définissant un logement (8) et une transmission (6) logée dans ledit logement (8) et configurée pour permettre la transmission de couple entre ledit accouplement d'entrée (4), l'au moins une machine électrique (5) et les accouplements (2, 3), ladite transmission (6) étant commandée de manière à permettre la transmission de couple selon l'un parmi :
- un mode dans lequel seul ledit accouplement d'entrée (4) fournit un couple auxdits accouplements (2, 3) ;
- un mode dans lequel les deux entre ladite entrée (4) et ladite au moins une machine électrique (5) fournissent un couple auxdits accouplements (2, 3),
**caractérisé en ce que** ladite transmission (6) comprend un différentiel (13) comprenant un premier moyeu de sortie (18a) porté rigidement par ledit premier accouplement (2) et un second moyeu (18b) porté rigidement par ledit second accouplement (3), lesdits moyeux (18a, 18b) et lesdits accouplements (2, 3) étant coaxiaux les uns par rapport aux autres le long d'un axe (B),
ladite transmission (6) comprenant un arbre (11) supporté en rotation libre autour d'un axe (A) sur ledit carter (7), ledit accouplement d'entrée (4) étant porté rigidement par ledit arbre (11) et ladite au moins une machine électrique (5) pouvant être reliée audit arbre (11),
ledit arbre (11) étant relié de manière fonctionnelle audit différentiel (13) par au moins un rapport de transmission de couple,
dans lequel ladite transmission (6) comprend un étage de réduction (21) interposé de manière fonctionnelle entre l'arbre (11) et ledit différentiel (13),
dans lequel ledit étage de réduction (21) comprend un arbre support (22) porté en rotation libre par ledit carter (7) autour d'un axe (C), ledit arbre support comprenant une paire de roues dentées (24, 25) configurées pour coopérer avec lesdites roues dentées (26, 27) dudit arbre (11), l'une desdites roues dentées (24, 25) étant configurée pour coopérer avec ledit différentiel (13).

2. Ensemble selon la revendication 1, dans lequel ledit arbre (11) porte des roues dentées (26, 27), ledit ensemble comprenant des moyens sélecteurs (30) configurés pour relier de manière fonctionnelle l'une desdites roues dentées (26, 27) audit différentiel (13).

3. Ensemble selon la revendication 1 ou 2, dans lequel ladite au moins une machine électrique (5) peut être reliée de manière sélective à l'arbre (11) au moyen de moyens sélecteurs (30).

4. Ensemble selon l'une quelconque des revendications précédentes, dans lequel ledit différentiel (13) est relié à ladite denture (23) au moyen d'une denture (45) portée rigidement par le porte-chaîne (14) dudit différentiel (13).

5. Ensemble selon l'une des revendications 2 à 4, dans lequel lesdits moyens sélecteurs (30) comprennent un manchon (31) mobile sous l'effet desdits moyens actionneurs (37) le long de l'arbre (11) de manière couplée en rotation, ledit manchon (31) définissant une denture (32) configurée pour coopérer avec une denture (33) réalisée sur ledit arbre (11) et avec une denture supplémentaire (34, 35, 36) réalisée sur l'élément à relier audit arbre (11), ledit manchon (31) étant dimensionné et commandé par lesdits moyens actionneurs (37) de manière à prendre une position dans laquelle il ne s'engrène avec aucune desdites dentures supplémentaires (34, 35) et une position dans laquelle il s'engrène avec l'une d'entre elles.

6. Ensemble selon l'une des revendications précédentes, dans lequel ladite transmission (6) comprend des moyens de verrouillage (70) dudit différentiel (13) configurés pour verrouiller le fonctionnement dudit différentiel (13).

7. Ensemble selon la revendication 6, dans lequel lesdits moyens de verrouillage (70) comprennent un manchon (71) mobile sous l'effet desdits moyens actionneurs (37) le long de l'un desdits moyeux (18a, 18b) de manière couplée en rotation à celui-ci, ledit manchon (71) définissant une denture (72) configurée pour coopérer de manière sélective avec une denture (73) réalisée sur ledit carter (7).

8. Ensemble selon l'une des revendications 2 à 7, dans lequel lesdits moyens actionneurs (37) comprennent au moins l'un d'un actionneur pneumatique, hydraulique, mécanique.

9. Ensemble selon l'une des revendications précédentes, dans lequel ladite au moins une machine électrique (5) est portée sur le côté opposé dudit carter (7) par rapport audit accouplement d'entrée (4).

10. Véhicule comprenant un moteur à combustion interne, un essieu avant et un essieu arrière et un ensemble de traction (1) selon l'une des revendications précédentes.

11. Véhicule selon la revendication 10, dans lequel au moins l'un dudit essieu avant et arrière comprend des moyens de roue libre, lesdits moyens de roue libre étant configurés pour permettre la transmission de couple aux moyeux de roue dudit essieu ou pour leur permettre d'être supportés de manière neutre.
